# EUROPÄISCHE PATENTSCHRIFT

(11) **EP 2 579 068 B1**
(45) Veröffentlichungstag und Bekanntmachung des Hinweises auf die Patenterteilung: **03.07.2019**
(21) Anmeldenummer: 12185361.8
(22) Anmeldetag: 21.09.2012
(51) Int. Cl.: G01V 8/18, G01S 17/42, G01S 7/51, F16P 3/14

(54) **Sensor zur Erfassung von Objekten in einem Überwachungsbereich**
Sensor for recording objects in a surveillance area
Capteur destiné à la saisie d'objets dans une zone de surveillance

(30) Priorität: 06.10.2011 DE 102011054247
(43) Veröffentlichungstag der Anmeldung: 10.04.2013
(73) Patentinhaber: Leuze electronic GmbH + Co KG, 73277 Owen/Teck (DE)
(72) Erfinder: Hubert, Jörg, 85244 Röhrmoos (DE)
(74) Vertreter: Ruckh, Rainer Gerhard

(56) Entgegenhaltungen:
- US-A1- 2002 135 541
- US-A1- 2010 157 173
- US-B1- 6 265 984

## Beschreibung

Die Erfindung betrifft einen Sensor zur Erfassung von Objekten in einem Überwachungsbereich.

Derartige Sensoren können insbesondere als optische Sensoren ausgebildet sein, die allgemein zu Überwachungsaufgaben, insbesondere im Bereich der Sicherheitstechnik eingesetzt werden. Beispielsweise kann mit einem derartigen Sensor ein Gefahrenbereich einer Anlage, einer Maschine oder dergleichen gebildet sein.

Zur Anzeige von Statusmeldungen, Warnmeldungen oder dergleichen weisen derartige Sensoren geeignete Anzeigeeinheiten auf. Im einfachsten Fall besteht eine solche Anzeigeeinheit aus einer einzelnen Leuchtdiode, die beispielsweise ein Blink- oder Dauerlichtsignal abgibt, wenn eine Warnmeldung abgegeben werden soll.

Mit zunehmendem Funktionsumfang der Sensoren steigen auch die Anforderungen an die Anzeigeeinheiten derart, dass mit diesen komplexe Textmeldungen oder sogar Graphiken ausgegeben werden müssen. Um Textmeldungen in Form von alphanumerischen Zeichen auszugeben ist es bekannt, ein- oder mehrstellige Siebensegmentanzeigen einzusetzen. Die Integration derartiger Siebensegmentanzeigen führt jedoch zu einem unerwünscht großen Konstruktions- und Kostenaufwand. Zudem sind die Anzeigemöglichkeiten der Siebensegmentanzeigen auf die Darstellungen einzelner alphanumerischen Zeichen beschränkt.

Die US 2010/0157173 A1 betrifft eine Anzeigeeinheit bestehend aus einer Anordnung von rotierenden Leuchtdioden. Die Drehzahl der rotierenden Leuchtdioden und die Taktraten zur Aktivierung der Leuchtdioden sind so abgestimmt, dass mit diesen stehende Bilder erzeugt werden. Mit dieser Anzeigeeinheit werden an einem zylindrischen Körper Werbetexte angezeigt, die von vorbeilaufenden Personen betrachtet werden können. Zur Beobachtung dieser Personen sind im Innenraum des zylindrischen Körpers Kameras installiert.

Der Erfindung liegt die Aufgabe zugrunde, eine kostengünstige Anzeigeeinheit mit hoher Funktionalität für einen Sensor der eingangs genannten Art bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Sensor dient zur Erfassung von Objekten in einem Überwachungsbereich, mit einer Anzeigeeinheit, umfassend eine Leuchtmittelreihe mit einer Linearanordnung von Leuchtmitteln, die um eine parallel zu deren Längsachse verlaufende Drehachse mit einer Drehzahl rotierend angeordnet ist. Die Leuchtmittelreihe mittels einer Steuereinheit derart angesteuert ist, dass mit einer Taktrate von einem darzustellenden matrixförmigen Anzeigefeld einzeln nacheinander dessen Spalten auf die Leuchtmittelreihe ausgegeben und mit dieser angezeigt werden, wobei die Taktrate so an die Drehzahl angepasst ist, dass sich diese Anzeigen zu einem stehenden Bild des Anzeigefelds ergänzen. Der erfindungsgemäße Sensor ist als optischer Sensor ausgebildet, welcher eine um eine Drehachse rotierende Sende- /Empfangseinheit aufweist. Die Leuchtmittelreihe rotiert mit der Sende- /Empfangseinheit.

Der Grundgedanke der Erfindung besteht somit darin, den Inhalt eines matrixförmigen Anzeigefelds nicht mit einer matrixförmigen Anordnung von Leuchtmitteln anzuzeigen. Vielmehr wird zur Anzeige allein eine lineare Leuchtmittelreihe verwendet. Die Anzeige eines matrixförmigen Anzeigefelds mit nur einer Leuchtmittelreihe erfolgt dadurch, dass die anzuzeigenden Informationen der einzelnen Spalten des Anzeigefelds mit einer Taktrate einzeln nacheinander der Leuchtmittelreihe zugeführt und so mit dieser angezeigt werden. Da sich die Leuchtmittelreihe mit einer Drehzahl dreht, an welche die Taktrate angepasst ist, ist die Leuchtmittelreihe bei der Anzeige einer bestimmten Spalte immer um einen bestimmen Drehwinkel zur Anzeige der vorigen Spalte versetzt. Durch die Abstimmung von Drehzahl und Taktrate entsteht dabei für das menschliche Auge ein stehendes Bild, dass sich aus den einzelnen

Spalten zusammensetzt, das heißt das gesamte matrixförmige Anzeigefeld wird als zweidimensionales Bild sichtbar.

Da nur eine Leuchtmittelreihe zur Anzeige dieses Bilds erforderlich ist, kann der konstruktive Aufwand für die Anzeigeeinheit gering gehalten werden. Weiterhin ist vorteilhaft, dass mit der erfindungsgemäßen Anzeigeeinheit komplexe Strukturen mit Zahlen, Buchstaben und/oder Graphiken angezeigt werden können, das heißt die erfindungsgemäße Anzeigeeinheit weist eine hohe Funktionalität auf.

Um mit den einzelnen Anzeigen der Leuchtmittelreihe ein stehendes, flimmerfreies Bild zu erzeugen, ist die Taktrate ein ganzzahliges Vielfaches der Drehzahl.

Die Auflösung des matrixförmigen Bilds ist in einer ersten Raumrichtung durch die Anzahl der einzelnen Leuchtmittel der Leuchtmittelreihe definiert. Die Auflösung in der zweiten Raumrichtung hängt von der Taktrate ab, mit der die Leuchtmittelreihe angesteuert wird.

Gemäß einer ersten konstruktiv besonders einfachen Ausgestaltung der Erfindung ist ein Leuchtmittel der Leuchtmittelreihe von einer einzelnen Leuchtdiode gebildet.

In diesem Fall wird eine einfarbige Anzeige von Informationen erhalten.

Gemäß einer zweiten, vorteilhaften Ausgestaltung der Erfindung ist ein Leuchtmittel der Leuchtmittelreihe von einer roten, grünen und einer blauen Leuchtdiode gebildet.

Mit der Steuereinheit können die blau, rot und grün leuchtenden Leuchtdioden jedes Leuchtmittels separat angesteuert werden, so dass eine farbige Anzeige über das gesamte Anzeigefeld möglich wird.

Der Sensor ist erfindungsgemäß als optischer Sensor ausgebildet, welcher eine um eine Drehachse rotierende Sende- /Empfangseinheit aufweist, wobei die Leuchtmittelreihe mit der Sende- /Empfangseinheit mitrotiert.

Damit kann der Drehmechanismus für die Sende- /Empfangseinheit des Sensors für die Drehbewegung der Leuchtmittelreihe mitgenutzt werden, das heißt es muss kein separater Drehmechanismus für die Leuchtmittelreihe vorgesehen werden, wodurch der konstruktive Aufwand zur Realisierung der Anzeigeeinheit signifikant reduziert werden kann.

Besonders vorteilhaft sind die Sende- /Empfangseinheit und die Leuchtmittelreihe in einem um die Drehachse rotierenden Messkopf integriert. Der Sensor ist in einem Gehäuse integriert, wobei die Leuchtmittelreihe innerhalb des Gehäuses angeordnet ist.

Durch die Integration der Leuchtmittelreihe im Messkopf kann die Anzeigeeinheit äußerst platzsparend im Sensor integriert werden.

Weiterhin ist das mit der Leuchtmittelreihe angezeigte Anzeigefeld durch das Gehäuse sichtbar.

Das Gehäuse erfüllt somit eine Doppelfunktion, indem dieses zusätzlich als Anzeigefläche mitgenutzt wird, wodurch der konstruktive Aufwand für die Anzeigeeinheit weiter reduziert wird. Weiterhin ist vorteilhaft, dass das Gehäuse eine großflächige Anzeige von Informationen ermöglicht, wobei sich das Feld der Anzeige über den vollen Winkelbereich von 360° oder flexibel wählbare Teile hiervon erstrecken kann.

Die Erfindung wird im Folgenden anhand der Zeichnungen erläutert. Es zeigen:
- Figur 1:: Schematische Darstellung eines optischen Sensors mit einer dort integrierten Anzeigeeinheit.
- Figur 2:: Erste Ausführungsform einer Leuchtmittelreihe der Anzeigeeinheit.
- Figur 3:: Zweite Ausführungsform einer Leuchtmittelreihe der Anzeigeeinheit.
- Figur 4:: Mit einer Leuchtmittelreihe gemäß Figur 2 oder 3 generiertes Anzeigefeld.
- Figur 5:: Draufsicht auf den optischen Sensor gemäß Figur 1 mit dem am Gehäuse dargestellten Anzeigefeld gemäß Figur 4.

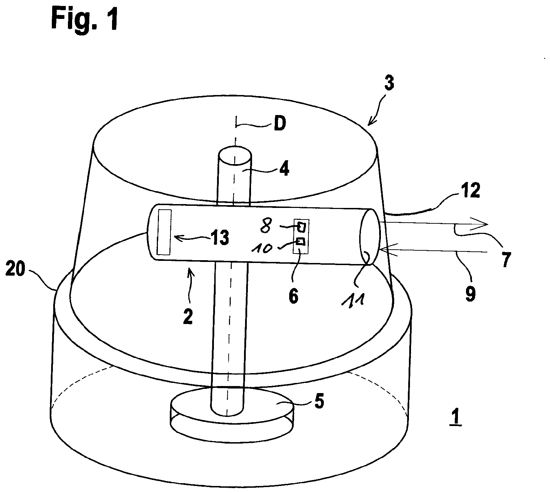

Figur 1 zeigt schematisch den Aufbau eines optischen Sensors 1 für eine Objektdetektion in einem Überwachungsbereich. Der optische Sensor 1 weist einen um eine vertikale Drehachse D drehbaren Messkopf 2 auf, der in einem ortsfesten, das heißt nicht mitdrehenden Gehäuse 3 angeordnet ist. Das Gehäuse 3 ist von einem rotationssymmetrischen Hohlkörper gebildet. Der Messkopf 2 ist auf einer entlang der Drehachse D verlaufenden Welle 4 gelagert, die mittels eines Antriebs 5 in eine Drehbewegung versetzt wird. Während der mit dem Messkopf 2 durchgeführten Objektdetektion dreht sich dieser mit einer konstanten Drehzahl. Die Drehzahl beträgt im vorliegenden Fall 25 Hz. Die aktuelle Drehposition des Messkopfes 2 wird mit einem Messgeber, insbesondere einem Winkelgeber, erfasst.

In dem Messkopf 2 ist eine Sende- /Empfangseinheit 6 integriert, welche ein optisches Distanzsensorelement bildet. Die mit der Sende- /Empfangseinheit 6 durchgeführten Distanzmessungen erfolgen nach einem Lichtlaufzeitverfahren.

Die Sende- /Empfangseinheit 6 umfasst einen Sendelichtstrahlen 7 emittierenden Sender 8 in Form einer Laserdiode. Der Laserdiode kann unmittelbar eine nicht gesondert dargestellte Sendeoptik in Strahlrichtung der Sendelichtstrahlen 7 nachgeordnet sein. Die Sende- /Empfangseinheit 6 umfasst weiter einen Empfangslichtstrahlen 9 empfangenden Empfänger 10 in Form einer Photodiode oder dergleichen. Dem Empfänger 10 ist eine Empfangsoptik 11 in Form einer Linse vorgeordnet. Generell kann die Empfangsoptik 11 auch als reflektierende Optik ausgebildet sein.

Wie aus der Figur 1 ersichtlich, werden die Sendelichtstrahlen 7 und Empfangslichtstrahlen 9 durch einen transparenten Abschnitt des Gehäuses 3 geführt, welcher ein Fenster 12 bildet. Das Fenster 12 erstreckt sich in Umfangsrichtung des Gehäuses 3 um den vollen Winkelbereich von 360°. Durch die Drehbewegung des Messkopfes 2 werden die Sendelichtstrahlen 7 periodisch über den gesamten Winkelbereich von 360° geführt, so dass dieser Bereich auch den Überwachungsbereich bildet, innerhalb dessen eine Objektdetektion erfolgt. Durch die Distanzmessung und die gleichzeitige Erfassung der aktuellen Drehposition des Messkopfes 2 können in einer nicht dargestellten Anzeigeeinheit die genauen Objektpositionen ermittelt werden.

Der optische Sensor 1 umfasst eine Anzeigeeinheit zur Anzeige von Statusmeldungen, Warn- und Gefahrenmeldungen und sonstigen den optischen Sensor 1 betreffenden, Informationen.

Die Anzeigeeinheit weist eine Leuchtmittelreihe 13 auf, die in dem zur Sende-/Empfangseinheit 6 gegenüberliegenden Ende des Messkopfs 2 eingebaut ist. Durch die Integration im Messkopf 2 rotiert die Leuchtmittelreihe 13 mit der Sende- /Empfangseinheit 6 mit, das heißt auch die Leuchtmittelreihe 13 rotiert mit der vom Antrieb 5 vorgegebenen Drehzahl um die Drehachse D.

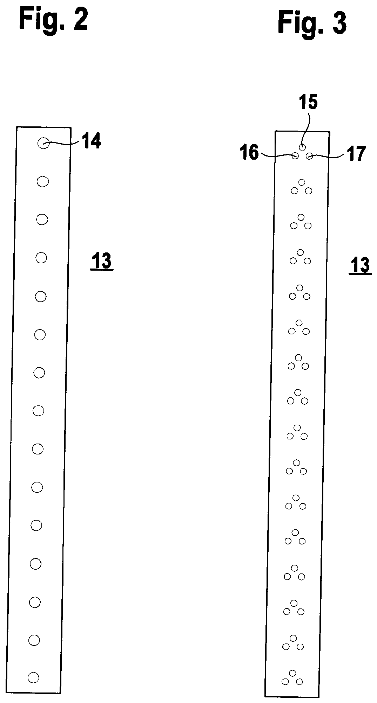

Die Figuren 2 und 3 zeigen zwei Ausführungsformen einer solchen Leuchtmittelreihe 13. Jede Leuchtmittelreihe 13 besteht aus einer Linearanordnung von jeweils identisch ausgebildeten Leuchtmitteln, die von einer nicht dargestellten Steuereinheit angesteuert werden. In den dargestellten Ausführungsformen weist eine Leuchtmittelreihe 13 sechszehn Leuchtmittel auf.

Bei der Ausführungsform gemäß Figur 2 besteht jedes Leuchtmittel aus einer einzelnen Leuchtdiode 14. Damit wird eine einfarbige Anzeige von Informationen ermöglicht.

Bei der Ausführungsform gemäß Figur 3 besteht jedes Leuchtmittel aus einer Mehrfachleuchtdiodenanordnung bestehend aus einer roten LED 15, das heißt einer rotes Licht emittierenden Leuchtdiode 14, einer blauen LED 16, das heißt einer blaues Licht emittierenden Leuchtdiode 14, und einer grünen LED 17, das heißt einer grünes Licht emittierenden Leuchtdiode 14. Mit dieser Leuchtmittelreihe 13 können mehrfarbige Anzeigen realisiert werden.

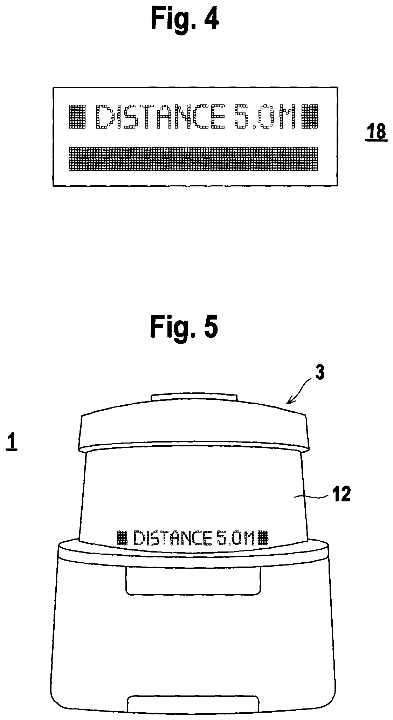

Obwohl die Leuchtmittelreihe 13 eine lineare, das heißt eindimensionale Struktur bildet, kann mit dieser ein matrixförmiges Anzeigefeld 18, wie in Figur 4 beispielhaft dargestellt, angezeigt werden.

Dieses matrixförmige Anzeigefeld 18 enthält als anzuzeigende Information den Schriftzug "Distanz 5.0 M" mit einer graphischen Unterlegung.

Das matrixförmige Anzeigefeld 18 besteht aus einer Matrix von N Zeilen und M Spalten. Wesentlich ist, dass die Anzahl N der Zeilen der Anzahl der Leuchtmittel der Leuchtmittelreihe 13 entspricht.

Mittels der Steuereinheit wird die Leuchtmittelreihe 13 so angesteuert, dass mit einer vorgegebenen Taktrate die Inhalte der einzelnen Spalten des Anzeigefelds 18 auf die Leuchtmittel der Leuchtmittelreihe 13 ausgegeben und damit mit diesen angezeigt werden. Dies bedeutet, dass in einem ersten Schritt die erste Spalte des Anzeigefelds 18 mit der Leuchtmittelreihe 13 angezeigt wird, und zwar der Bildpunkt der ersten Zeile mit dem ersten Leuchtmittel, der Bildpunkt der zweiten Zeile mit dem zweiten Leuchtmittel usw.

Entsprechend der Taktrate werden so alle Spalten des Anzeigefelds 18 nacheinander mit der Leuchtmittelreihe 13 angezeigt.

Die Leuchtmittelreihe 13 ist dabei dicht hinter der Innenseite des Fensters 12 des Gehäuses 3 angeordnet, so dass deren Leuchtmittel durch das Fenster 12 sichtbar sind. Damit bildet das Fenster 12 eine Anzeigefläche, an welcher die mit der Leuchtmittelreihe 13 generierte Anzeige sichtbar ist.

Durch die Drehbewegung der Leuchtmittelreihe 13 bewegt sich die Leuchtmittelreihe 13 zwischen den Zeitpunkten zweier untereinander folgender Anzeigen um einen bestimmten Winkel weiter.

Die Taktrate ist dabei so an die Drehzahl der Leuchtmittelreihe 13 angepasst, dass die Taktrate ein ganzzahliges Vielfaches der Drehzahl ist.

Durch diese Vorgabe entsteht für den Betrachter ein stehendes Bild, das aus den einzeln nacheinander mit der Leuchtmittelreihe 13 angezeigten Inhalten zusammengesetzt ist. Dies bedeutet, dass durch die Drehung der Leuchtmittelreihe 13 und die sequentielle Taktung der Leuchtmittelreihe 13 ein stehendes Bild des Inhalts des matrixförmigen Anzeigefelds 18 entsteht, welches wie in Figur 4 dargestellt an dem Fenster 12 sichtbar ist.

### Bezugszeichenliste

- (1): Optischer Sensor
- (2): Messkopf
- (3): Gehäuse
- (4): Welle
- (5): Antrieb
- (6): Sende- /Empfangseinheit
- (7): Sendelichtstrahlen
- (8): Sender
- (9): Empfangslichtstrahlen
- (10): Empfänger
- (11): Empfangsoptik
- (12): Fenster
- (13): Leuchtmittelreihe
- (14): Leuchtdiode
- (15): rote LED
- (16): blaue LED
- (17): grüne LED
- (18): Anzeigefeld
- (D): Drehachse

## Patentansprüche

1. Sensor zur Erfassung von Objekten in einem Überwachungsbereich, mit einer Anzeigeeinheit, umfassend eine Leuchtmittelreihe (13) mit einer Linearanordnung von Leuchtmitteln, die um eine parallel zu deren Längsachse verlaufende Drehachse (D) mit einer Drehzahl rotierend angeordnet ist, wobei die Leuchtmittelreihe (13) mittels einer Steuereinheit derart angesteuert ist, dass mit einer Taktrate von einem darzustellenden matrixförmigen Anzeigefeld (18) einzeln nacheinander dessen Spalten auf die Leuchtmittelreihe (13) ausgegeben und mit dieser angezeigt werden, wobei die Taktrate so an die Drehzahl angepasst ist, dass sich diese Anzeigen zu einem stehenden Bild des Anzeigefelds (18) ergänzen, wobei der Sensor als optischer Sensor (1) ausgebildet ist, **dadurch gekennzeichnet, dass** der optische Sensor (1) eine um die Drehachse (D) rotierende Sende- /Empfangseinheit (6) aufweist, wobei die Leuchtmittelreihe (13) mit der Sende- /Empfangseinheit (6) mitrotiert.

2. Sensor nach Anspruch 1, **dadurch gekennzeichnet, dass** die Taktrate ein ganzzahliges Vielfaches der Drehzahl ist.

3. Sensor nach einem der Ansprüche 1 oder 2, **dadurch gekennzeichnet, dass** ein Leuchtmittel der Leuchtmittelreihe (13) von einer einzelnen Leuchtdiode (14) gebildet ist.

4. Sensor nach einem der Ansprüche 1 oder 2, **dadurch gekennzeichnet, dass** ein Leuchtmittel der Leuchtmittelreihe (13) von einer roten, grünen und einer blauen Leuchtdiode (14) gebildet ist.

5. Sensor nach einem der Ansprüche 1 bis 4, **dadurch gekennzeichnet, dass** das matrixförmige Anzeigefeld (18) Texte, Zahlen, und/oder Graphiken enthält.

6. Sensor nach einem der Ansprüche 1 bis 5, **dadurch gekennzeichnet, dass** die Sende- /Empfangseinheit (6) einen Distanzsensor bildet, wobei diese einen Sendelichtstrahlen (7) emittierenden Sender (8) und einen Empfangslichtstrahlen (9) empfangenden Empfänger (10) aufweist.

7. Sensor nach einem der Ansprüche 1 bis 6, **dadurch gekennzeichnet, dass** die Sende- /Empfangslichtstrahlen (6) und die Leuchtmittelreihe (13) in einem um die Drehachse (D) rotierenden Messkopf (2) integriert sind.

8. Sensor nach einem der Ansprüche 1 bis 7, **dadurch gekennzeichnet, dass** dieser in einem Gehäuse (3) integriert ist, wobei die Leuchtmittelreihe (13) innerhalb des Gehäuses (3) angeordnet ist.

9. Sensor nach Anspruch 8, **dadurch gekennzeichnet, dass** das mit der Leuchtmittelreihe (13) angezeigte Anzeigefeld (18) durch das Gehäuse (3) sichtbar ist.

## Claims

1. A sensor for recording objects in a surveillance area, having a display unit, comprising a row of illuminants (13) with a linear arrangement of illuminants which is arranged to rotate at a rotational speed about an axis of rotation (D) running parallel to its longitudinal axis, the row of illuminants (13) being controlled by means of a control unit in such a way that the columns of a matrix-shaped display panel (18) to be displayed are output individually one after the other at a clock rate from the matrix-shaped display panel (18) onto the row of illuminants (13) and displayed with the row of illuminants (13), where the clock rate is adapted to the rotational speed in such a way that these displays complement one another to form a stationary image of the display panel (18), the sensor being designed as an optical sensor (1),
**characterized in that** the optical sensor (1) has a transmitter/receiver unit (6) which rotates about the axis of rotation (D), the row of illuminants (13) rotating with the transmitter/receiver unit (6).

2. The sensor according to claim 1, **characterised in that** the clock rate is an integer multiple of the rotational speed.

3. The sensor according to one of claims 1 or 2, **characterised in that** an illuminant among the row of illuminants (13) is formed by a single light-emitting diode (14).

4. The sensor according to one of claims 1 or 2, **characterised in that** an illuminant among the row of illuminants (13) is formed by a red, green and a blue light-emitting diode (14).

5. The sensor according to one of claims 1 to 4, **characterised in that** the matrix-shaped display field (18) contains texts, numbers and/or graphics.

6. The sensor according to one of claims 1 to 5, **characterised in that** the transmitting/ receiving unit (6) forms a distance sensor, this having a transmitter (8) which emits transmitted light beams (7) and a receiver (10) which receives received light beams (9).

7. The sensor according to one of claims 1 to 6, **characterised in that** the transmitting/ receiving light beams (6) and the row of illuminants (13) are integrated in a measuring head (2) rotating about the axis of rotation (D).

8. The sensor according to one of the claims 1 to 7, **characterised in that** said sensors is integrated in a housing (3), wherein the row of illuminants (13) is arranged inside the housing (3).

9. The sensor according to claim 8, **characterised in that** the display field (18) displayed with the row of illuminants (13) is visible through the housing (3).

## Revendications

1. Capteur destiné à la saisie d'objets dans une zone de surveillance, avec une unité d'affichage, comprenant une rangée d'illuminants (13) avec un arrangement linéaire d'illuminants qui est agencé pour tourner à une vitesse de rotation autour d'un axe de rotation (D) parallèle à son axe longitudinal, la rangée d' illuminants (13) étant commandée au moyen d'une unité de commande de telle sorte que les colonnes d'un panneau d'affichage en forme de matrice (18) à afficher sont sollicitées individuellement les unes après les autres à une fréquence d'horloge de la matrice en forme de panneau d'affichage (18) sur la rangée d'illuminants (13) et affichées avec la rangée d'illuminants (13), dans lequel la fréquence d'horloge est adaptée à la vitesse de rotation de telle sorte que ces affichages se complètent pour former une image fixe du panneau d'affichage (18), le capteur étant conçu comme un capteur optique (1), **caractérisé en ce que** le capteur optique (1) présente une unité émettrice/réceptrice (6) qui tourne autour de l'axe de rotation (D), la rangée d'illuminants (13) tournant avec l'unité émettrice/réceptrice (6).

2. Capteur selon la revendication 1, **caractérisé en ce que** la fréquence d'horloge est un multiple entier de la vitesse de rotation.

3. Capteur selon l'une des revendications 1 ou 2, **caractérisé en ce qu'**un illuminant parmi la rangée d'illuminants (13) est formé par une seule diode électroluminescente (14).

4. Capteur selon l'une des revendications 1 ou 2, **caractérisé en ce qu'**un illuminant parmi la rangée d'illuminants (13) est constituée d'une diode électroluminescente rouge, verte et bleue (14).

5. Capteur selon l'une quelconque des revendications 1 à 4, **caractérisé en ce que** le champ d'affichage en forme de matrice (18) contient des textes, des chiffres et/ou des graphiques.

6. Capteur selon l'une quelconque des revendications 1 à 5, **caractérisé en ce que** l'unité émettrice/réceptrice (6) forme un capteur de distance comportant un émetteur (8) émettant des faisceaux lumineux transmis (7) et un récepteur (10) recevant les faisceaux lumineux reçus (9).

7. Capteur selon l'une quelconque des revendications 1 à 6, **caractérisé en ce que** les faisceaux lumineux de transmission/de réception (6) et la rangée d'illuminants (13) sont intégrés dans une tête de mesure (2) tournant autour de l'axe de rotation (D).

8. Capteur selon l'une quelconque des revendications 1 à 7, **caractérisé en ce que** ledit capteur est intégré dans un boîtier (3), dans lequel la rangée d'illuminants (13) est disposée à l'intérieur du boîtier (3).

9. Capteur selon la revendication 8, **caractérisé en ce que** le champ d'affichage (18) affiché avec la rangée de sources lumineuses (13) est visible à travers le boîtier (3).
